# EUROPÄISCHE PATENTANMELDUNG

(11) **EP 4 344 539 A1**
(43) Veröffentlichungstag der Anmeldung: **03.04.2024**
(21) Anmeldenummer: 23200432.5
(22) Anmeldetag: 28.09.2023
(51) Int. Cl.: A01K 29/00

(54) **VORRICHTUNG UND VERFAHREN ZUM AUTOMATISIERTEN KENNZEICHNEN EINES AUSSCHLEUSUNGSREIFEN SCHWEINES**

(30) Priorität: 28.09.2022 LU 502848
(71) Anmelder: Big Dutchman International GmbH, 49377 Vechta (DE)
(72) Erfinder: Hunziker, Urs, 8706 MEILEN (CH); Hase, Maxim, 49413 Dinklage (DE); Engelking, Dennis, 31604 Raddestorf (DE)
(74) Vertreter: Eisenführ Speiser

(57) **Zusammenfassung**

Vorrichtung zum automatisierten Kennzeichnen eines ausschleusungsreifen Schweines, umfassend: eine Detektionseinrichtung zum Bestimmen einer Gewichtsangabe wenigstens eines Schweines, eine Datenbank mit schweinebezogenen Daten, wobei die schweinebezogenen Daten Angaben über wenigstens ein bestimmtes oder ein bestimmbares Schwein umfassen, und eine Auswertungseinrichtung zum Erzeugen eines Ausschleusungsindikators, wobei die Auswertungseinrichtung zum Datenaustausch mit der Detektionseinrichtung und mit der Datenbank eingerichtet ist, **dadurch gekennzeichnet, dass** die Auswertungseinrichtung den Ausschleusungsindikator in Abhängigkeit von dem bestimmten Gewichtswert und in Abhängigkeit von den schweinebezogenen Daten erzeugt, um das Schwein mit dem Ausschleusungsindikator automatisiert als ausschleusungsreif zu kennzeichnen.

## Beschreibung

Die vorliegende Erfindung betrifft eine Vorrichtung zum automatisierten Kennzeichnen eines ausschleusungsreifen Schweines. Zudem betrifft die vorliegende Erfindung ein Verfahren zum automatisierten Kennzeichnen eines ausschleusungsreifen Schweines. Zudem betrifft die vorliegende Erfindung ein Computerprogrammprodukt, ein computerlesbares Speichermedium, einen computerlesbaren Datenträger und ein Datenträgersignal.

Es sind Systeme bekannt, welche die Selektion von Schweinen erlauben, welche die Schlachtreife erreicht haben. In üblichen und bekannten Systemen werden Schweine über eine Wiegezelle geführt und über ein mechanisches Wegleitsystem aussortiert. Mechanische Waagen und nachgeschaltete Laufwegsteuerungen sind aufwändig in der Anschaffung und benötigen einen zusätzlichen Unterhalt über die Lebensdauer der Anlage. Die Laufwegsteuerung muss zum Beispiel periodisch überprüft werden und die Wiegezelle bzw. Waage muss fortlaufend gewartet werden.

Neben den mechanischen Waagen sind kamerabasierende Systeme bekannt, welche zur Gewichtsabschätzung von Schweinen eingerichtet sind.

Beispielsweise ist aus der WO 2016/192853 ein Verfahren zur Bestimmung biometrischer Eigenschaften von Wirbeltieren bekannt, bei dem mit einem Kamerasystem und mit Methoden der Bildverarbeitung ein Gewicht eines Schweines anhand von markanten Punkten auf der Körperoberfläche der Schweine geschätzt werden.

Zudem ist aus der WO 2021/170488 ein System zum Erfassen von Tieren bekannt, bei dem mit einer 3D-Kameraeinheit und einer Rechnereinheit ein Gewicht des Tieres basierend auf dem Kamerabild bestimmt wird. Zudem ist in der WO 2021/170488 eine Ausgabeeinrichtung vorgesehen, die ein visuelles Element umfasst, durch welches bei Betrachtung des mindestens einen Tieres unterstützend Daten anzeigbar sind, welche zu dem Tier gespeichert oder in der Rechnereinheit erzeugt sind. Das visuelle Element kann beispielsweise eine Augmented oder Virtual-Reality-Brille sein kann, die von einem Nutzer getragen wird. Das System aus der WO 2021/170488 ist also ein System, das ein Nutzer bzw. Ausschleuser von Schweinen nutzen kann, um sich das Gewicht des Schweines und weitere tierbezogene Daten optisch anzuzeigen.

Problematisch an solchen kamerabasierten Systemen ist allerdings, dass die Schätzung des Gewichtes ungenau sein kann und das Kamerabild als einzige Referenzgröße fehlerbehaftet sein kann. Hinzu kommen weitere Problematiken, die speziell bei der Schweinezucht auftreten.

In einer typischen Schweineproduktion werden ca. 10 bis 50 Schweine pro Bucht aufgezogen (Zentraleuropa hat typischerweise halb so viele Tiere in der Bucht wie im Rest der Welt). Ein Maststall weist typischerweise 2000 bis 10'000 Tiere auf, welche in derartigen Buchten aufgezogen werden. Eine Schweinefarm weist typischerweise mehrere Ställe auf. Ein Produzent besitzt typischerweise eine oder mehrere Farmen, welche wiederum sowohl in geografischer Nähe als auch in größeren Distanzen domiziliert sind. Es werden also im Vergleich zur Rinder und Pferdezucht wesentlich mehr Tiere pro Fläche gehalten und aufgezogen, was die Selektion der Schweine erschwert.

Zusätzlich ist es in der Schweinezucht von Interesse, ab einer Minimalbelegung eines Stalles, alle Tiere aus dem Stall auszuschleusen, um ihn anschließend zu desinfizieren. Bei Pferden und Rindern ist es möglich, die Tiere auf die Weide auszutreiben und den Stall in der Zwischenzeit zu reinigen.

Gegenüber der Kälber- und Rinderaufzucht stellen sich weitere andere Probleme bei der Schweinezucht. Beispielsweise müssen die Prozesse in der landwirtschaftlichen Anlage deutlich effizienter sein, denn sowohl der Ertrag pro Tier ist tiefer, als auch die Menge der abzuerntenden Tiere ist höher. Zudem ist die Bewegungsintensität der Tiere unterschiedlich. Manche Tiere bewegen sich wenig und liegen viel. Dies macht eine kamerabasierte Gewichtsschätzung schwierig.

Auch das Rudelverhalten ist bei Schweinen unterschiedlich. Schweine legen sich nämlich bei gewissen Temperaturbedingungen zusammen oder zum Teil aufeinander. Dies erschwert die entsprechende kamerabasierende Gewichtsschätzung zusätzlich. Außerdem ist der Ertrag pro Tier tief, so, dass sich eine Einzeltierüberwachung z. B. mit Funkeinheiten, die an den Tieren angebracht werden, in vielen Fällen kommerziell nicht rechnet.

Die Selektion von Schweinen, welche in einer Farm ausgeschleust werden sollen, z.B. zum Schlachten, gestaltet sich zudem auch schwierig, da heutzutage immer mehr relevante Anforderungen der Weiterverarbeiter zum eigentlich typischen minimalen Gewichtskriterium hinzukommen. Beispielsweise muss sichergestellt werden, dass neben der reinen Gewichtsangabe auch weitere Kriterien erfüllt sind, wie z. B. Anforderungen an die Tiernahrung während des Gewichtszuwachses oder die Auslaufflächen der Tiere.

Rein kamerabasierte Systeme, wie zum Beispiel aus der WO 2021/170488 bekannt, werden diesen Anforderungen und Problemen nicht gerecht.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden mit der eine Ausschleusungsreife eines Schweines gesichert festgestellt wird. Zudem sollen Ressourcen geschont und der Ausschleusungsprozess der Schweine effizienter ausgestaltet werden.

Erfindungsgemäß wird zur Lösung dieser Aufgabe eine Vorrichtung zum automatisierten Kennzeichnen eines ausschleusungsreifen Schweines gemäß Anspruch 1 vorgeschlagen.

Es wird also eine technische Vorrichtung vorgeschlagen, mit der ein Schwein gekennzeichnet wird, das aus seiner Bucht ausgeschleust werden kann. Kennzeichnen bezieht sich generisch darauf, ein Schwein als ausschleusungsreif kenntlich zu machen. Das Kennzeichnen kann auf verschiedene Art und Weise erfolgen, beispielsweise optisch oder akustisch oder dergleichen. Zudem ist der Begriff ausschleusungsreif von dem Begriff schlachtreif zu unterscheiden. Ein Schwein kann schlachtreif sein, beispielsweise, wenn es sein vorbestimmtes Schlachtgewicht erreicht hat. Es kann trotz Erreichen des Schlachtgewichtes aber nicht ausschleusungsreif sein. Ausschleusungsreif bezieht sich darauf, ob ein Schwein aus seiner aktuellen Bucht ausgeschleust werden soll. Der Grund für das Ausschleusen kann verschiedene Gründe habe, beispielsweise, dass das Schwein schlachtreif ist und zur Schlachtung überführt werden soll, oder dass das Schwein seine Bucht wechseln soll oder ein Tierarztbesuch für das Schwein ansteht, und es deshalb ausgeschleust werden soll, oder dergleichen. Schlachtreife und Ausschleusungsreife sind demnach unterschiedlich zu verstehen. Beispielsweise kann ein schlachtreifes Schwein als ausschleusungsreif gekennzeichnet werden, wenn ein Tiertransport bereitgestellt ist und das schlachtreife Schwein aus seiner Bucht ausgeschleust werden. Ist kein Tiertransport bereitgestellt, kann ein Schwein trotz erreichter Schlachtreife als nicht ausschleusungsreif gekennzeichnet sein, da es z. B. noch nicht abtransportiert werden kann. Es versteht sich, dass das Ausschleusen oder Austreiben meint, die Schweine aus einer Bucht oder einem Aufzuchtbereich auszuschleusen oder auszutreiben.

Die Vorrichtung zum automatisierten Kennzeichnen des ausschleusungsreifen Schweines umfasst eine Detektionseinrichtung zum Bestimmen einer Gewichtsangabe wenigstens eines Schweines. Die Vorrichtung umfasst also eine Einrichtung, die zum Bestimmen des Gewichts wenigstens eines Schweines eingerichtet ist. Die Detektionseinrichtung kann beispielsweise mit einem optischen Kamerasystem, wie aus dem Stand der Technik bekannt, oder mit einer elektronischen Waage ausgebildet sein, oder dergleichen. Die Detektionseinrichtung berechnet oder bestimmt das Gewicht wenigstens eines Schweines. Der Wortlaut wenigstens kennzeichnet dabei, dass die Vorrichtung auch dazu eingerichtet sein kann, gleichzeitig das Gewicht von mehreren Schweinen zu detektieren bzw. zu bestimmen. Detektieren kann generisch verstanden werden als Erfassen oder Messen oder dergleichen. Die Gewichtsangabe ist beispielsweise das aktuelle Körpergewicht eines bestimmten Schweines, dessen Gewicht mit der Detektionseinrichtung bestimmt wird.

Die Vorrichtung umfasst zudem eine Datenbank mit schweinebezogenen Daten, wobei die schweinebezogenen Daten Angaben über wenigstens ein bestimmtes oder ein bestimmbares Schwein umfassen. Der Begriff schweinebezogene Daten lehnt sich an die Definition von personenbezogenen Daten an. Schweinebezogene Daten umfassen demnach Angaben über wenigstens ein bestimmtes oder ein bestimmbares Schwein. Die schweinebezogenen Daten sind also einem bestimmten Schwein eindeutig zuzuordnen. Die schweinebezogenen Daten können auch als Schweinedaten bezeichnet werden und sie charakterisieren nicht nur das Schwein körperlich, sondern die schweinebezogenen Daten sind alle Daten, die dem bestimmten Schwein zuzuordnen sind. Es wird also vorgeschlagen, dass eine Datenbank mit schweinebezogenen Daten eingerichtet und bereitgestellt wird, in der die schweinebezogenen Daten abrufbar hinterlegt sind. Die Datenbank kann beispielsweise eine lokale Datenbank in einer landwirtschaftlichen Anlage zur Nutztierhaltung sein, oder eine externe Clouddatenbank, die außerhalb der landwirtschaftlichen Anlage zur Nutztierhaltung angeordnet ist. Die Datenbank kann auch als Datenspeicher oder Speichermittel verstanden werden.

Die Vorrichtung umfasst zudem eine Auswertungseinrichtung zum Erzeugen eines Ausschleusungsindikators, wobei die Auswertungseinrichtung zum Datenaustausch mit der Detektionseinrichtung und mit der Datenbank eingerichtet ist. Die Auswertungseinrichtung ist demnach eine technische Einheit in Form von Hardware oder Software, die dazu eingerichtet ist, Daten mit der Detektionseinrichtung und der Datenbank auszutauschen oder wenigstens zu empfangen. Die Auswertungseinrichtung kann auch als Auswertungsmodul verstanden werden. Die Auswertungseinrichtung kann beispielsweise Teil einer Steuereinrichtung einer landwirtschaftlichen Anlage zur Nutztierhaltung sein oder Teil einer externen Cloudcomputereinrichtung. Die Auswertungseinrichtung ist dazu eingerichtet, die Daten oder Signale von der Detektionseinrichtung und der Datenbank zu empfangen. Dazu kann die Auswertungseinrichtung beispielsweise über eine Kommunikationsschnittstelle mit der Detektionseinrichtung und/ oder der Datenbank verbunden sein. Die Auswertungseinrichtung erzeugt einen Ausschleusungsindikator. Ein Ausschleusungsindikator ist ein Indikator der anzeigt, ob ein Schwein ausschleusungsreif ist. Der Ausschleusungsindikator ist also ein technisches Mittel, das den Zustand, dass ein Schwein ausgeschleust werden kann oder soll, anzeigt. Der Ausschleusungsindikator kann auf verschiedene Art und Weise implementiert sein, beispielsweise elektronisch, analog, optisch oder akustisch oder dergleichen. Ein Beispiel für einen elektronischen Ausschleusungsindikator ist ein Bit oder Datenelement mit zwei Zuständen. Ein analoger Ausschleusungsindikator ist beispielsweise eine ausgedruckte Bezeichnung eines bestimmten Schweines auf einer Liste. Ein optischer Ausschleusungsindikator ist beispielsweise eine optische Anzeige, die ein Schwein optisch kennzeichnen. Ein akustischer Ausschleusungsindikator ist beispielsweise ein akustisches Signal, z.B. eine computergenierte Sprachausgabe, die dem auszuschleusenden Schwein eindeutig zuordenbar ist.

Ein wesentlicher Aspekt der Erfindung ist, dass die Auswertungseinrichtung den Ausschleusungsindikator in Abhängigkeit von dem bestimmten Gewichtswert und in Abhängigkeit von den schweinebezogenen Daten erzeugt, um das Schwein mit dem Ausschleusungsindikator automatisiert als ausschleusungsreif zu kennzeichnen.

Es wird also erfindungsgemäß vorgeschlagen, dass zusätzlich zu der bestimmten Gewichtsangabe der Ausschleusungsindikator in Abhängigkeit der schweinebezogenen Daten erzeugt wird. Im Gegensatz zu den bekannten kamerabasierten Systemen werden also zusätzlich schweinebezogene Daten berücksichtigt, um das Schwein als ausschleusungsreif zu kennzeichnen. Die erfindungsgemäße Lösung schafft somit eine Möglichkeit durch die Berücksichtigung der zusätzlichen schweinebezogenen Daten Zusatzkriterien bzw. Parameter zum Ausschleusen zu berücksichtigen. Die vorgeschlagene Vorrichtung zur Auslese von Schweinen in einer landwirtschaftlichen Anlage zur Schweinezucht, generiert die Selektionsentscheidung demnach nicht nur alleinig auf Basis des Gewichtes des Schweines, wie aus dem Stand der Technik bekannt, sondern die Selektionsentscheidung hängt auch von zusätzlichen Parametern ab, nämlich wenigstens von den schweinebezogenen Daten. Im Gegensatz zu den bekannten Systemen wird damit der Vorteil erreicht, dass z.B. Wartezeiten oder Engpässe beim Ausschleusen reduziert werden können. Die Schweine werden also erst dann aus ihren Buchten bzw. aus ihrem Aufzuchtbereich ausgeschleust, wenn sie neben der Gewichtsangabe noch zusätzliche Kriterien erfüllen. Zudem kann die Genauigkeit der Gewichtsbestimmung durch die zusätzliche Berücksichtigung der schweinebezogenen Daten verbessert werden. Es kann nämlich beispielsweise vorkommen, dass ein Gewicht falsch am Tag der Schlachtung mit dem optischen System erfasst wird. Aufgrund eines Abgleiches mit den historischen Gewichtsdaten aus den schweinebezogenen Daten kann jedoch festgestellt werden, dass die erkannte Gewichtsangabe nicht richtig ist und das Schwein trotzdem als ausschleusungsreif gekennzeichnet wird. Auch können beispielsweise die schweinebezogenen Daten aktuelle Positionsdaten eines bestimmten Schweines umfassen, sodass einem Ausschleuser das Schwein angezeigt wird, dass als nächstes ausgeschleust werden soll. So wird der Ausschleusungsprozess effizienter. Weitere Vorteile entstehen je nachdem, welche schweinebezogenen Daten bzw. welche Art von Daten in der Auswertung berücksichtigt werden. Ein Ausschleuser ist eine Person, die die Schweine aus den Buchten bzw. aus dem Aufzuchtbereich ausschleust. Ausschleusen kann auch als Austreiben verstanden werden.

Der Begriff Vorrichtung wird hier insbesondere synonym verstanden zu den Begriffen Anordnung oder System. Insbesondere können einzelne, mehrere oder alle Bestandteile der hier beschriebenen Vorrichtung verteilt, insbesondere räumlich verteilt, und/oder losgelöst oder miteinander verbunden, insbesondere drahtlos oder kabelgebunden verbunden, angeordnet sein.

Vorzugsweise wird vorgeschlagen, dass die Detektionseinrichtung ein optisches Kamerasystem ist, das mit einem Auswertungsalgorithmus dazu eingerichtet ist, einen aktuellen Gewichtswert des wenigstens einen Schweines zu bestimmen und/oder wobei die Detektionseinrichtung eine Waage ist, vorzugsweise eine elektronische Waage. Ein optisches Kamerasystem einzusetzen ist in Verbindung mit der zusätzlichen Berücksichtigung von schweinebezogenen Daten besonders vorteilhaft, da der Ausschleusungsindikator ressourcenarm auf Basis einer Bilderkennung und den Schweinedaten erzeugt wird. Die zusätzlichen schweinebezogenen Daten können dazu eingesetzt werden, eine verbesserte und genauere Gewichtsbestimmung mit dem Auswertungsalgorithmus umzusetzen. Das optische Kamerasystem ist beispielsweise mit einer oder mehreren Kameras ausgebildet.

Der Auswertungsalgorithmus kann auch als Algorithmus zum Auswerten des mit dem Kamerasystem bestimmten Bildsignales verstanden werden. Es wird also vorgeschlagen, Methoden der Bildverarbeitung einzusetzen, um den aktuellen Gewichtswert des wenigstens einen Schweins zu bestimmen, beispielsweise anhand von markanten Punkten des Schweines.

Eine elektronische Waage als Detektionseinrichtung in Kombination mit den tierbezogenen Daten einzusetzen ist ebenfalls eine vorteilhafte und bevorzugte Ausführungsform, da die Waage das Gewicht der Schweine robust und fehlerfrei bestimmt. Durch die zusätzliche Berücksichtigung der schweinebezogenen Daten kann zusätzlich ein individuelles Ausschleusen für das Schwein bereitgestellt werden. Normalerweise wird bei Waagen nur das Gewicht der Tiere alleinig bestimmt, aber keine Zusatzkriterien. Durch die zusätzliche Berücksichtigung der tierbezogenen Daten kann zum Beispiel ein krankes Schwein oder ein falsch ernährtes Schwein an der Waage als nicht ausschleusungsreif gekennzeichnet werden, obwohl das Schlachtgewicht des Schweines bereits erreicht ist. Diese und andere Möglichkeiten, das Schwein nicht nur auf Basis des Gewichtes als ausschleusungsreif zu kennzeichnen, werden erst durch die zusätzliche Berücksichtigung der schweinebezogenen Daten bereitgestellt.

Vorzugsweise wird vorgeschlagen, dass die Datenbank eine Clouddatenbank ist und/oder eine lokale Datenbank mit einer Cloudschnittstelle ist, wobei vorzugsweise die lokale Datenbank dazu eingerichtet ist, im Falle eines Ausfalls der Cloudschnittstelle, lokal gespeicherte Daten der Auswertungseinrichtung bereitzustellen. Es wird also in beiden Ausführungsformen vorgeschlagen, dass eine Schnittstelle zu einem Cloudserver bereitgestellt wird. Eine Clouddatenbank ist eine Datenbank, die extern und außerhalb einer landwirtschaftlichen Anlage bereitgestellt ist, also nicht Teil der landwirtschaftlichen Anlage zur Nutztierhaltung ist. Zusätzlich oder alternativ wird vorgeschlagen, dass eine lokale Datenbank implementiert wird, diese aber eine Cloudschnittstelle aufweist, um Daten von einer Clouddatenbank zu empfangen. Es wird also vorgeschlagen, dass die schweinebezogenen Daten extern in der Cloud gespeichert werden. Dies ist vorteilhaft, da der Aufwand für den Anlagenbetreiber der Tierzuchtanlage reduziert wird, da dieser sich nicht mit der Datenpflege und dem Datenvorhalten auseinandersetzen muss. In einer besonders bevorzugten Ausführungsform ist die lokale Datenbank dazu eingerichtet, beim Ausfall der Cloudschnittstelle einen Teil der Clouddatenbank abzuspeichern und der Auswertungseinrichtung bereitzustellen. Es wird also vorgeschlagen einen Teil der Clouddatenbank lokal vorzuhalten, um bei einem Ausfall der Verbindungen zur Clouddatenbank den ordnungsgemäßen Betrieb zumindest temporär aufrecht zu erhalten. Dies erhöht die Sicherheit des Ausschleusungsprozesses und gewährleistet die ordnungsgemäße Funktionsweise der Vorrichtung auch beim Ausfall der Kommunikation mit der Clouddatenbank. Die Clouddatenbank kann beispielsweise Teil eines Cloudspeichersystems sein oder als Clouddatenbanksystem verstanden werden. Die schweinebezogenen Daten sind demnach Clouddaten. Die schweinebezogenen Clouddaten werden zum Cloudcomputing oder zum Aufbau einer Clouddatenbank bereitgestellt. Cloudcomputing bezeichnet die Bereitstellung von Computing-Services, einschließlich Servern, Speicher, Datenbanken, Netzwerken, Software, Analysen und Intelligenz, die auf oder in einer externen Anlage implementiert sind oder ausgeführt werden. Ein Beispiel für Cloudcomputing ist eine Softwareanwendung, die auf einem Cloudcomputer oder -server implementiert ist und die über eine Datenschnittstelle auf eine Clouddatenbank über eine Anfrage zugreift und als Antwort auf die Anfrage von der Clouddatenbank Clouddaten geliefert bekommt, und die empfangenen Clouddaten in der Softwareanwendung verarbeitet. Durch die Berücksichtigung von Clouddaten und/oder Cloudprocessing kann eine bessere Selektion der auszuschleusenden Tiere erreicht werden. Insbesondere können durch das Wissen um die zu einer Tier-ID gehörende (Lebens-) Vergangenheit zusätzliche Selektionsoptimierungen vorgenommen werden. So können durch eine Cloud, beziehungsweise, die via Cloud verfügbaren Daten gewichtet werden und/oder beispielshaft Faktoren in einer Selektion gewichtet werden.

Vorzugsweise wird vorgeschlagen, dass die Vorrichtung Teil einer landwirtschaftlichen Anlage zur Nutztierhaltung ist. Als landwirtschaftliche Anlage wird zum Beispiel ein Mastbetrieb verstanden, also eine technische Anlage im Bereich der Tierproduktion, Viehwirtschaft oder Viehhaltung, in denen landwirtschaftliche Nutztiere zur Erzeugung von Nahrungsmitteln und Rohstoffen gehalten werden. In einer besonders bevorzugten Ausführungsform ist die landwirtschaftliche Anlage eine Anlage zur Schweinehaltung bzw. zur Schweinemast, insbesondere um Schlachtgut zu produzieren.

Vorzugsweise wird vorgeschlagen, dass die Vorrichtung zudem eine Datenerfassung aufweist mittels der neue schweinebezogenen Daten den schweinebezogenen Daten in der Datenbank hinzugefügt werden, um die schweinebezogenen Daten zu aktualisieren und/oder eine Schweinedatenhistorie zu erstellen. Es wird also vorgeschlagen, das Teil der Vorrichtung eine Schnittstelle zum Eingeben von neuen schweinebezogenen Daten ist. Diese Schnittstelle kann als Datenerfassung verstanden werden.

Vorzugsweise wird vorgeschlagen, dass das mit der Detektionseinrichtung bestimmte Gewicht aufgrund einer Tieridentifikation bzw. eine eindeutige Kennzeichnung einem entsprechenden Tier zugeordnet ist. Es erfolgt eine datentechnische Zuordnung des bestimmten Gewichtes zu dem Schwein. So kann eine Gewichtshistorie erstellt und überwacht werden.

Besonders bevorzugt wird vorgeschlagen, dass die Datenerfassung eine manuelle Datenerfassung ist, als beispielsweise eine Computerschnittstelle, an der die Daten manuell eingegeben werden. Zusätzlich oder alternativ ist die Datenerfassung eine halbautomatisierte Datenerfassung, also beispielsweise eine Scaneinrichtung mit der schweinebezogene Daten eingelesen werden, und/oder ist die Datenerfassung eine vollautomatisierte Datenerfassung, beispielsweise ein kamerabasiertes System das auf Basis von Objekterkennung schweinebezogene Daten auslesen kann.

In einer besonders bevorzugten Ausführungsform ist die Datenerfassung dazu eingerichtet, neue schweinebezogene Daten in regelmäßigen Zeitabständen, schwellwertgesteuert oder ereignisgesteuert der Datenbank hinzuzufügen. Es wird also vorgeschlagen, die schweinebezogenen Daten regelmäßig in den Datenspeicher zu streamen. Damit wird eine aktuelle Datengrundlage bereitgestellt. Es wurde festgestellt, dass gute Selektionsentscheidungen für die Aberntungen der Schweine vorliegen, wenn schweinebezogene Daten häufiger als alle 2 Stunden berücksichtigten werden, insbesondere häufiger als alle 30 Minuten, bevorzugt häufiger als alle 10 Minuten. Bei einer tieferen Hochladefrequenz ist die Granularität der Daten zu groß, um bei den für die Selektion notwendigen Daten eine genügend breite Datenbasis zu haben, da diese aufgrund der Sensitivität der Auswertemechanismen zum Teil stark gefiltert und bereinigt werden müssen. So treten ab einem Hochladeintervall von größer 120 Minuten andere Effekte in den Vordergrund. So ist zum Beispiel ein Cloudupdate von einmal pro Tag zu träge um Tendenzen zu erkennen und damit zu risikobehaftet für eine darauf basierende Tierselektion. Diese Datenupdatehäufigkeit wird insbesondere zum Ausfiltern von unerwünschten Schwingkreisen und zur Ausrei-ßerunterdrückung von Einzelwerten benötigt.

Vorzugsweise wird vorgeschlagen, dass die schweinebezogenen Daten die folgenden Angaben aus der Liste umfassen, nämlich wenigstens eine eindeutige Schweine-Identifikation (ID) und eine Gewichtsangabe. Es wird also vorgeschlagen, dass die schweinebezogenen Daten wenigstens eine eindeutige Nummer bzw. eindeutige Kennzeichnung des Schweines umfassen und dessen Gewichtsangabe. Durch die zusätzliche Berücksichtigung der Gewichtsangabe und der Schweine-Identifikation, kann beispielsweise bei einem kamerabasierten System der aktuelle mit der Detektionseinrichtung bestimmte Gewichtswert mit der Gewichtsangabe aus den schweinebezogenen Daten verglichen werden. Demnach wird vorgeschlagen, die erfasste bzw. gemessene Gewichtsangabe mit einer gespeicherten Gewichtsangabe abzugleichen, um den Ausschleusungsindikatorzu erzeugen. Damit ist die Auswertung weniger fehleranfällig.

Optional umfassen die schweinebezogenen Daten wenigstens eine oder mehrere der nachfolgenden Angaben:
- eine Lebensdauerangabe, insbesondere eine Geburtstags- oder Altersangabe,
- eine Gattungsangabe,
- eine oder mehrere historische Gewichtsangaben,
- eine Nahrungszusammensetzung
- eine Nahrungsaufnahmeangabe,
- einen Tierbewegungsindikator
- eine Flüssigkeitsaufnahmeangabe,
- eine Tiergesundheitsangabe,
- eine Medikamentenangabe,
- eine Zusatzstoffangabe,
- eine Krankheitsangabe,
- eine Ausscheidungsangabe,
- eine Aufzuchtortsangabe,
- eine Positionsangabe zur Kennzeichnung eines Aufenthaltsorts des Schweines in einer landwirtschaftlichen Anlage,
- eine Verhaltensangabe,
- einen bzw. den Schlachtreifeindikator,
- eine Abweichung einer ermittelten Gewichtsangabe zu einem Zielgewicht,
- eine Genauigkeit der ermittelten Gewichtsangabe.

Es werden folgende Vorteile erreicht: Durch die Berücksichtigung der Lebensdauerangabe zusätzlich zu dem bestimmten Gewicht können zu junge Schweine als nicht ausschleusungsreif gekennzeichnet werden, obwohl ihr Schlachtgewicht bereits erreicht wurde oder zu alte Schweine, die zu leicht sind und als ausschleusungsreif angezeigt werden. Durch die Berücksichtigung der Gattungsangabe können Schweine unterschiedlicher Art gleichzeitig gehalten werden und an einem Tag der Schlachtung nur bestimmte Schweine einer bestimmten Gattung als ausschleusungsreif angezeigt werden. Durch die Berücksichtigung historischer Gewichtsangaben, kann das mit der Detektionseinrichtung bestimmte Gewicht verifiziert werden. Durch die Berücksichtigung der Nahrungszusammensetzung kann geprüft werden, ob ein Schwein tatsächlich eine vorbestimmte Nahrungszusammensetzung aufgenommen hat und beispielsweise nur Schweine ausgeschleust werden, dessen Nahrungszusammensetzung einem Biozertifikat entspricht. Durch die Berücksichtigung der Nahrungsmittelaufnahmeangabe kann festgestellt werden, wie das Gewicht mit der Nahrungsmittelaufnahme korreliert und nur Schweine mit einer guten oder schlechten Wachstumsrate ausgeschleust werden. Beispielsweise können nur Schweine mit einer guten Wachstumsrate als Zuchtschweine dienen. Durch die Berücksichtigung des Tierbewegungsindikators kann das Gewicht mit dem Bewegungsprofil korreliert werden und nur Schweine ausgeschleust werden, die ausreichend Bewegung hatten und bei denen demnach von einer guten Fleischqualität ausgegangen werden kann. Durch die Berücksichtigung der Flüssigkeitsaufnahmeangabe kann festgestellt werden, wie das Gewicht mit der Flüssigkeitsaufnahmeangabe korreliert. Durch die Berücksichtigung der Tiergesundheitsangabe können nur gesunde und ausreichend schwere Schweine ausgeschleust werden. Durch die Berücksichtigung der Medikamentenangabe können ausreichend schwere Schweine ausgeschleust werden, die nur bestimmte Medikamente in ihrem Leben verabreicht bekommen haben. Medikamentenangaben betreffen beispielsweise Angaben zu Leistungssteigerungsmitteln, Nahrungsergänzungsstoffe, Wachstumsförderer etc. Durch die Berücksichtigung der Zusatzstoffangabe können ausreichend schwere Schweine als ausschleusungsreif gekennzeichnet werden, die z.B. keine wachstumsfördernde Mittel zu sich genommen haben. Durch die Berücksichtigung der Krankheitsangabe kann verhindert werden, dass kranke, aber ausreichend schwere Schweine ausgeschleust werden. Durch die Berücksichtigung der Ausscheidungsangabe kann der Gesundheitszustand der Schweine festgestellt werden und nur gesunde Schweine ausgeschleust werden. Durch die Berücksichtigung der Aufzuchtortsangabe können ausreichend schwere Schweine von bestimmter Herkunft als ausschleusungsreif gekennzeichnet werden. Durch die Berücksichtigung der Positionsangabe kann ein ausreichend schweres und örtlich nächstes Schwein als ausschleusungsreif angezeigt werden und damit der Ausschleusungsprozess effizienter ausgestaltet werden. Durch Berücksichtigung der Verhaltensangabe können verhaltensauffällig Schweine ausgeschleust werden. Durch die Berücksichtigung eines Schlachtreifeindikators kann festgestellt werden, ob ein Gewicht des Schweines mit der Schlachtreife korreliert. Durch die Berücksichtigung der Abweichung der ermittelten Gewichtsangabe zu einem Zielgewicht kann die aktuell erfasste Gewichtsangabe mit der Abweichung korreliert werden. Durch die Berücksichtigung der Genauigkeit der ermittelten Gewichtsangabe, kann ein Schwein ausgeschleust werden, dessen ermitteltes Gewicht innerhalb der ermittelten Fehlertoleranz liegt.

Vorzugsweise wird vorgeschlagen, dass die Detektionseinrichtung zum Bestimmen der Gewichtsangabe des wenigstens einen Schweines dazu eingerichtet ist, mittels Interpolation die Gewichtsangabe des Schweines zu schätzen. Es wird also vorgeschlagen, dass die Detektionseinrichtung dazu eingerichtet und ausgebildet ist, die Gewichtsangabe des Schweines zu interpolieren. Dazu kann in der Detektionseinrichtung ein Interpolationsalgorithmus oder eine Interpolationsfunktion hinterlegt sein.

Bei Verwendung einer kamerabasierten Detektionseinrichtung als Detektionseinrichtung wird besonders bevorzugt vorgeschlagen, dass die Detektionseinrichtung mittels einer Interpretation mehrerer Bilder aus unterschiedlichen Perspektiven oder in unterschiedlicher zeitlicher Reihenfolge dazu eingerichtet ist, die Gewichtsangabe des Schweines zu schätzen. Es wird also vorgeschlagen, dass die Detektionseinrichtung mehrere Kamerabilder aufzeichnet und die Gewichtsangabe aus den verschiedenen Blickwinkeln interpoliert, um auf das Gewicht zu schließen, oder die Detektionseinrichtung ist dazu eingerichtet das Gewicht zu unterschiedlichen Zeitpunkten festzustellen und dann eine Interpolation zwischen den unterschiedlichen Zeitpunkten vorzunehmen, um auf das Gewicht zu schließen.

Vorzugsweise wird vorgeschlagen, dass die Auswertungseinrichtung zum Erzeugen des Ausschleusungsindikators mit einem Auswertungsalgorithmus ausgebildet ist, wobei der Auswertungsalgorithmus lokal auf einer Berechnungseinheit einer landwirtschaftlichen Anlage zur Nutztierhaltung eingerichtet ist und/oder der Auswertungsalgorithmus dezentral auf einer Cloudcomputereinrichtung eingerichtet ist. Es wird also vorgeschlagen, dass der Auswertungsalgorithmus ein lokaler Algorithmus ist, der in der landwirtschaftlichen Anlage der Nutztierhaltung eingesetzt wird oder der Auswertungsalgorithmus dezentral auf einer Cloudcomputereinrichtung implementiert ist
In einer besonders bevorzugten Ausführungsform ist der Auswertungsalgorithmus ein Machine-Learning Algorithmus, insbesondere ein künstliches neuronales Netz oder dergleichen. Es versteht sich, dass bei der Verwendung eines künstlichen neuronalen Netzes, dass künstliche neuronale Netz in einem Trainingsprozess auf Basis von gelabelten Daten antrainiert wurde, um Features zu erlernen, die es erkennen soll. Es wird also ein trainiertes künstliches neuronales Netz vorgeschlagen. Geeignete Machine-Learning Algorithmen sind zum Beispiel Lineare Regression, Logistische Regression, Support Vector Machine, Random Forest, Bayes-Klassifikator, Methode der kleinsten Quadrate, k-Means-Algorithmus, künstliche Neuronale Netze, Mustererkennung (Pattern Recognition) oder dergleichen. Künstliche neuronale Netze können auch als künstliche Intelligenz KI bezeichnet werden.

Es hat sich gezeigt, dass bei der sehr großen Datenvielfalt der schweinebezogenen Daten, diese Daten besonders geeignet sind, mittel KI interpretiert, verbessert oder akkumuliert zu werden. Dabei wird zur Reduktion der Kommunikationsmenge bevorzugt eine Verarbeitung außerhalb der landwirtschaftlichen Anlage vorgeschlagen, insbesondere durch Cloudprocessing. Zusätzlich können Ergebnisse, welche aus der Farm oder aus dem Schlachtbetrieb wieder in die Cloud hochgeladen werden, als Lernmatrizen für ML verwendet werden. Dies erlaubt eine noch feinere Steuerung der Zielparameter.

Vorzugsweise ist ein Ausgabewert des Auswertungsalgorithmus wenigstens ein bzw. der Ausschleusungsindikator. Es wird also vorgeschlagen, dass der Auswertungsalgorithmus den Ausschleusungsindikator ausgibt. Beispielsweise kann das vorstehend beschriebene künstliche neuronale Netz den Ausschleusungsindikator an einem Ausgangsknoten des neuronalen Netzes ausgeben. Das neuronale Netz berücksichtigt dann wenigstens an einer Eingangsschicht die tierbezogenen Daten sowie die mit der Detektionseinrichtung erfasste Gewichtsangabe.

Vorzugsweise wird vorgeschlagen, dass die Vorrichtung zudem eine Anzeigeeinrichtung zum Anzeigen eines Schweines aufweist, das mit dem Ausschleusungsindikator als ausschleusungsreif gekennzeichnet ist, und wobei die Anzeigeeinrichtung dazu eingerichtet ist, wenigstens ein Schwein in Abhängigkeit von dem erzeugten Ausschleusungsindikator als ausschleusungsreif zu kennzeichnen. Es wird also vorgeschlagen, dass Teil der Vorrichtung eine Anzeigeeinrichtung ist, die das wenigstens eine ausschleusungsreife Schwein anzeigt bzw. kennzeichnet, das mit dem Ausschleusungsindikator gekennzeichnet wurde. Mit der Anzeigeeinrichtung wird also das gekennzeichnete Schwein angezeigt bzw. wird das gekennzeichnete Schwein über die Anzeigeeinrichtung identifizierbar. Die Anzeigeeinrichtung kann mit unterschiedlichen Anzeigemitteln ausgebildet sein, die nachfolgend beschrieben sind.

In einer besonders bevorzugten Ausführungsform ist die Anzeigeeinrichtung eine optische Anzeigeeinrichtung oder eine akustische Anzeigeeinrichtung, also beispielsweise ein Endgerät, auf dem das ausschleusungsreife Schwein optisch angezeigt wird oder beispielsweise ein Kopfhörer mit einer Sprachausgabe. Die optische Anzeige ist aber nicht nur auf eine Bildschirmanzeige beschränkt, sondern kann auch mit einer Lichtquelle oder einem Ausdruck oder dergleichen umgesetzt sein. Optisch bezieht sich also generisch auf ein optisches Wahrnehmen. Das akustische Anzeigemittel bezieht sich entsprechend generische auf ein akustisches Wahrnehmen. Beispielsweise können künstlich Geräusche, Töne oder Sprachausgabe oder dergleichen generiert werden.

Dies ist vorteilhaft, denn dem Ausschleuser kann so mittels eines Kommunikationsmechanismus mitgeteilt werden, z.B. optisch oder akustisch, welches Tier in welcher Farm, aus welchem Stall, in welcher Bucht auszuschleusen ist.

Vorzugsweise umfasst die Anzeigeeinrichtung wenigstens ein Anzeigemittel zum Kennzeichnen ausschleusungsreifer Schweine, wobei das Anzeigemittel ein Anzeigemittel ist aus der Liste von Anzeigemitteln aufweisend:
- Ein mobiles Anzeigemittel mit einem Softwareprogramm zur computergestützten Erweiterung der Realitätswahrnehmung, vorzugsweise eine Augmented-Reality-Brille und/oder ein Endgerät mit einer kamerabasierten Augmented-Reality-Applikation.
- Ein schwenkbarer Scheinwerfer, der dazu eingerichtet ist, ein ausschleusungsreifes Schwein mittels einer Lichtprojektion auf das Schwein als ausschleusungsreif zu markieren, vorzugsweise wird eine Infrarot-Lichtprojektion mit dem Scheinwerfer erzeugt, und weiter vorzugsweise wird die Helligkeit der Lichtprojektion in Abhängigkeit eines Umgebungslichtsensors angepasst. Dazu kann der schwenkbare Scheinwerfer mehrachsig schwenkbar ausgebildet sein und mittels einem Leuchtmittel und einer Optik die Lichtprojektion erzeugen. In einer weiteren Ausführungsform wird für die technische Vorrichtung für die Visualisierung an den Menschen ein nicht sichtbares Licht verwendet, also eine Infrarot-Lichtprojektion eingesetzt. So kann zum Beispiel durch Infrarotlicht dieselbe Markierung wie mit sichtbarem Licht erfolgen, der Ausschleuser hat einen Konverter, welcher ihm die IR-Markierung anzeigt z.B. eine entsprechende Brille. Dies hat den Vorteil, dass nicht durch ein sichtbares Licht Unruhe in der Bucht entsteht und so der Stresspegel der Tiere tief gehalten wird.
- Eine Bildschirmanzeige, in der ein ausschleusungsreifes Schwein markiert ist. Die Bildschirmanzeige kann z. B. ein Display eines Endgerätes sein, also z.B. eines Computers, eines Tabletts, eines Smartphones oder dergleichen.
- Eine Liste, in der ein ausschleusungsreifes Schwein aufgelistet ist. Die Liste kann dabei analog oder elektronisch ausgebildet sein, also z.B. als ausgedruckte Liste, die z.B. aus einem Drucker ausgegeben werden kann oder als elektronische Liste, die in einem Endgerät angezeigt wird.
- Ein mobiles Anzeigemittel mit dem ein ausschleusungsreifes Schwein angezeigt wird, also zum Beispiel ein Smartphone, ein Tablet oder dergleichen.
- Ein Videoprojektionssystem, das dazu eingerichtet ist, ein Symbol auf das ausschleusungsreifs Schwein zu projizieren, also z.B. ein semitransparenter Bildschirm, wie eine Augmented-Reality Brille, oder ein Beamer. Blickt ein Nutzer durch den semitransparenten Bildschirm hindurch, wird das Schwein mit einer Markierung gekennzeichnet. Ein Videoprojektionssystem kann aber auch ein klassischer Beamer sein.
- Eine Kopfhörereinrichtung mit einer Sprachausgabe, die eine Kennzeichnung eines ausschleusungsreifen Schweines akustisch wiedergibt. Es kann also zum Beispiel der Name oder eine eindeutige Identifikationsnummer eines Schweines an einem Lautsprecher eines Kopfhörers computergestützt ausgegeben werden.

Vorzugsweise umfasst die Vorrichtung zudem eine Positionsbestimmungseinrichtung zur örtlichen Bestimmung eines Schweines in einem Aufzuchtbereich einer landwirtschaftlichen Anlage zur Nutztierhaltung und/oder zur örtlichen Bestimmung einer Person in dem Aufzuchtbereich der landwirtschaftlichen Anlage zur Nutztierhaltung. Es wird also vorgeschlagen, dass eine Einrichtung Teil der Vorrichtung ist, die dazu eingerichtet ist, die örtliche Position eines Schweines in der landwirtschaftlichen Anlage festzustellen oder die einer Person in der landwirtschaftlichen Anlage. Durch die Berücksichtigung der örtlichen Position des Schweines oder der Person in der landwirtschaftlichen Anlage wird in vorteilhafter Weise erreicht, dass diese Information zur Optimierung des Ausschleusungsprozesses bereitsteht. Durch die Berücksichtigung der Position des Schweines und/oder der Person kann beispielsweise ein Schwein, das einer Person bzw. dem Ausschleuser am nächsten steht, als ausschleusungsreif gekennzeichnet werden. Zudem kann durch die Auswertung der Position mittels einem Algorithmus, eine bestmögliche Reihenfolge bestimmt werden, in welcher die Schweine ausgeschleust werden sollen. So wird der Ausschleusungsprozess effizienter ausgestaltet. So kann eine Selektion oder Ausschleusung der auszuschleusenden Tiere aufgrund des Gewischtes und mindestens eines Zusatzkriterium erfolgen, wobei diese in einer günstigen Reihenfolge einsortiert werden, insbesondere, wenn am Schluss die Tiere in einer bestimmten Reihenfolge verladen werden müssen.

Vorzugsweise ist die Positionsbestimmungseinrichtung zur örtlichen Bestimmung des Schweines eine Positionsbestimmungseinrichtung aus der Liste von Positionsbestimmungseinrichtungen aufweisend:
- ein Kamerasystem, das dazu eingerichtet ist, Ohrmarken von Schweinen in dem Aufzuchtbereich zu erkennen, insbesondere umfasst die Ohrmarke einen optisch scanbaren Code,
- ein Kamerasystem, das dazu eingerichtet ist mittels Objekterkennung einen auf einem Schwein aufgebrachte Kennzeichnung zu identifizieren,
- ein Ortungssystem mit einer Sendeeinrichtung und einer Empfängereinrichtung, wobei die Empfängereinrichtung an dem Schwein angeordnet ist.

In Bezug auf das Kamerasystem wird also vorgeschlagen, die Kamera nicht nur zur Gewichtserkennung zu benutzen, sondern zusätzlich auch noch zur Positionsbestimmung. Das Kamerasystem wird also für zwei Funktionen eingesetzt, womit Ressourcen für zusätzliche Messeinrichtungen zur Positionsbestimmung eingespart werden können.

Die auf einem Schwein aufgebrachte Kennzeichnung ist beispielsweise ein Stempel oder eine aufgesprühte Markierung.

Das Ortungssystem kann beispielsweise mittels RFID Technologie umgesetzt sein.

Vorzugsweise werden Airtags oder deren Funktionsäquivalenzen zur Positionsbestimmung verwendet. Diese sind grundsätzlich bekannt.

Es wird also eine Identifikation und Positionsbestimmung der einzelnen Tiere vorgeschlagen, z.B. aufgrund von optischen Erkennungsmerkmalen oder einer Triangulation aufgrund von Funkwellen, oder z.B. ein permanentes Tracking der Position des Tier durch automatische Verfolgung aufgrund von Kamerabildern vorgeschlagen.

Durch die Positionsbestimmung der Tiere kann ein Sortieren der Tierreihenfolge unter Berücksichtigung der momentanen Position des Tieres erfolgen und eine günstige Reihenfolge bestimmt und angezeigt werden.

Weiter vorzugsweise ist die Positionsbestimmung zur örtlichen Bestimmung einer Person in dem Aufzuchtbereich der landwirtschaftlichen Anlage eine kameragestützte Personenerkennung mit einem Personenerkennungsalgorithmus, und/oder ein Ortungssystem mit einer Sendeeinrichtung und einer Empfängereinrichtung, wobei die Empfängereinrichtung an der Person angeordnet ist. Es wird also vorgeschlagen, nicht nur die Schweine örtlich zu bestimmen, sondern auch die Ausschleuser bzw. Personen, die die Schweine ausschleusen. Die Position der Personen kann dann zur Optimierung des Ausschleusungsprozesses verwendet werden.

Vorzugsweise ist die Anzeigeeinrichtung mit einem Auswertungsmodul eingerichtet, eine Reihenfolge zum Ausschleusen mehrerer ausschleusungsreifer Schweine anzuzeigen, wobei die Reihenfolge in Abhängigkeit von der mit der Positionsbestimmungseinrichtung bestimmten örtlichen Position der Schweine bestimmt ist.

Zusätzlich oder alternativ ist die Anzeigeeinrichtung dazu eingerichtet, die mit dem der Positionsbestimmungseinrichtung zur örtlichen Bestimmung eines Schweines bestimmte Position eines ausschleusungsreifen Schweines anzuzeigen.

Vorzugsweise ist die Positionsbestimmungseinrichtung dazu eingerichtet ist, die Position des Schweines kontinuierlich aufzuzeichnen, und wobei die Positionsbestimmungseinrichtung dazu eingerichtet ist, die aufgezeichnete Position als Positionsangabe in der Datenbank als schweinebezogene Daten zu speichern, um ein Bewegungsprofil zu erfassen.

Vorzugsweise umfasst die Vorrichtung zudem eine Zusatzdatenschnittstelle zum Empfangen von Zusatzdaten eines EDV-Systems, wobei die Auswertungseinrichtung zum Erzeugen des Ausschleusungsindikators zudem dazu eingerichtet ist, den Ausschleusungsindikator in Abhängigkeit von den empfangenen Zusatzdaten zu erzeugen.

Vorzugsweise sind die Zusatzdaten Daten aus der Liste von Daten aufweisend:
- eine Ortsposition eines Ausschleusers, die vorzugsweise mit einer bzw. der Positionsbestimmung zur örtlichen Bestimmung einer Person in dem Aufzuchtbereich der landwirtschaftlichen Anlage ermittelt wird,
- eine Transportkapazität einer Transporteinrichtung,
- eine Ausschleusungsgesamtmenge,
- ein Zeitplan.

Vorzugsweise ist das optische Kamerasystem aus mehreren Kameras ausgebildet, die jeweils aus unterschiedlichen Richtungen einen Aufzuchtbereich überwachen, wobei die Kameras vorzugsweise hochauflösende Kameras sind, mit einer Auflösung von mindestens 720p, und weiter vorzugsweise die mehreren Kameras dazu eingerichtet sind mittels einem übergeordneten Interpretationsmechanismus eine interpolierte Gewichtsabschätzung zu erzeugen. Über die Kameraauflösung von Überwachungskameras weiß man, dass sie bis zu 100 Pixel Auflösung pro Objekt benötigen, um eine Objekterkennung, eine Objektidentifikation oder eine Objektzuordnung machen zu können. Dies zeigt, dass auch bei heute typischen hochauflösenden Kameras von 3840 x 2160 (höhere Auflösungen wären mit einem überproportional großen Datenverkehr verbunden) in der Vertikalen bei gleichmäßiger Verteilung und maximalem Kontrast höchstens 10 Objekte (2000/(2*100)) sicher erkannt werden können. Tiere ordnen sich aber nicht sauber gleichverteilt an und deshalb wird mittels eines Algorithmus aufgrund von mehreren Kameras mit höherer Auflösung pro möglichem Objekt eine Interpretation pro Viewport realisiert und dann die Viewportübergänge derart abgeglichen, dass über eine ganze Szene die Anzahl der Tiere und deren Position ermittelt wird. Dies erzeugt eine höhere Zuverlässigkeit der durch den Kameraverbund erzeugten sensorischen Daten bei der Gewichtsbestimmung. Ein Viewport ist ein von einer Kamera erfasster Bildbereich und kann auch Sichtfeld oder Sichtbereich verstanden werden.

Vorzugsweise umfasst die Vorrichtung zudem wenigstens eine automatisierte Türeinrichtung, wobei die Türeinrichtung dazu eingerichtet ist, in Abhängigkeit von dem erzeugten Ausschleusungsindikator seinen Öffnungszustand zu verändern.

Vorzugsweise umfasst die Vorrichtung zudem einen Zertifikatsgenerator der dazu eingerichtet ist, ein Zertifikat für ein Schwein zu erstellen, das mit dem Ausschleusungsindikator als ausschleusungsreif markiert wurde. Es wird also vorgeschlagen, dass für ein ausgeschleustes Tier ein Zertifikat erstellt wird, insbesondere für jedes einzelne Tier ein separates. Dabei kann aufgrund der Clouddaten im Sinne eines Nachweises eine zugesicherte Eigenschaft zertifiziert werden. Insbesondere kann so sichergestellt werden, dass das Zertifikat die Selektionskriterien bestätigt und/oder quantifiziert. Fürden Fachmann sind solche Zertifikate auch mit einem hohen Maß an Fälschungssicherheit erstellbar. Insbesondere lässt sich durch einen hohen Automationsgrad eine manuelle Manipulation in hohem Masse verhindern. Ein solches Zertifikat kann auch die Genauigkeit der jeweiligen Werte (z.B. Gewicht) mitdeklarieren.

Vorzugsweise wird eine implizite Erkennung der Ausschleusung des entsprechenden Tieres und entsprechende Registrierung vorgeschlagen, beispielsweise mittels via Geo-Tracking des Tieres oder KI-basierender Verfolgung via Kamera.

Bevorzugt wird eine manuelle Bestätigung der Ausschleusung und entsprechende Registrierung vorgeschlagen. Vorzugsweise wird eine Ausschleusungsbestätigung aus Redundanzgründen bevorzugt lokal und zusätzlich in der Cloud getätigt.

Vorzugsweise wird eine Rekalibrierung oder Ergänzung der schweinebezogenen Daten in dem Cloudspeicher vorgeschlagen, basierend auf weiteren Ergebnissen, wobei die Rekalibrierung oder Ergänzung insbesondere mit zusätzlichem Deep Learning bei künstlichen neuronelen Netzten durchgeführt wird, und insbesondere zurückgegebene Daten vom Schlachten und/oder von der Weiterverarbeitung der Tiere den Clouddaten hinzugefügt werden.

Vorzugsweise wird vorgeschlagen, mehrere Ausschleusungsindikatoren gleichzeitig mit der Auswertungseinrichtung zu erzeugen, um gleichzeitig mehrere Schweine als ausschleusungsreif zu kennzeichnen.

Vorzugsweise wird vorgeschlagen, dass die Auswertungseinrichtung dazu eingerichtet ist, eine günstige Reihenfolge der Schweine mit dem Ausschleusungsindikator zu bestimmen.

In einer besonders bevorzugten Ausführungsform ist die Detektionseinrichtung dazu eingerichtet Bilder von mehreren Kameras zu empfangen und eine situative Bewertung zu machen. Dies, weil größere Anlagen zu viele Tiere beinhalten, als dass dies mit einer normalen Kamera eindeutig erfasst werden kann.

In einer weiteren bevorzugten Ausführungsform werden mehrere Kameras als Detektionseinrichtung eingesetzt, die zwei Aufzuchtbereiche überwachen, zwischen denen sich die Tiere bewegen können. Es wird vorgeschlagen, dass ein Überschneidungsbereich der Kameras so gewählt wird, dass die Objekterkennung Tiere im Bereich der Überschneidungszone interpretieren können. Dies kann einerseits dadurch realisiert werden, dass beide Kameras die Tiere im Übergangsbereich erkennen können und dann eine übergeordnete Systematik doppelt erkannte ausschneidet oder andererseits dadurch realisiert werden, dass erst im übergeordneten System aus den Ergebnissen beider Kameras (welche sich dann nicht einmal überschneiden müssen) mittels eines vereinheitlichten Abstraktionslayers über die ganze Szene (z.B. Punktwolkenmodelle mit Umrechnung der kamerapositionsbasierten Ortswinkel auf Absolutpositionen und allenfalls abgeleiteter Geschwindigkeit und/oder [bei 3D Kameras] Distanz) eine Objekterkennung durchgeführt wird und so auch ,halbe Tiere', welche von einer Kamera erfasst werden, in eine Gesamtinterpretation für eine Gewichtsbestimmung überführt werden. Dadurch wird die Gewichtsermittlung für die Vorrichtung aus der kombinatorischen Interpretation (allenfalls mittels Cloudcomputing) der beiden Primärsensoren erzeugt.

In einer weiteren besonders bevorzugten Ausführungsform wird die Vorrichtung um die Eigenschaft ergänzt, dass mehrere Ausschleuser gleichzeitig an einer Abernte arbeiten. Dadurch reduziert sich der Stress für die Tiere, weil diese weniger lange auf den Abtransport warten müssen. Dabei kann die Steuerung auch den Arbeitsfortschritt und die allenfalls unterschiedliche Arbeitsgeschwindigkeit der Ausschleuser mitberücksichtigen und dynamisch die Reihenfolge der Tiere anpassen, insbesondere unter Berücksichtigung der zurückzulegenden Wegstrecken des Ausschleusers.

In einer weiteren besonders bevorzugten Ausführungsform enthält die Vorrichtung mindestens eine Kamera als Detektionseinrichtung, welche für die Gewichtsbestimmung verwendet wird, wobei diese Kamera zusätzlich auch für eine weitere Analyse der Tiere verwendet wird. So können zum Beispiel Aktivitäten der Tiere überwacht oder vom Stallklima abhängiges Tierverhalten erkannt werden. Dieser Dual-Use der Kamera reduziert die Anzahlkomponenten in der Bucht, was wiederum die Ausfallwahrscheinlichkeit reduziert und somit die Zuverlässigkeit des Gesamtsystems erhöht. Eine Kamera kann auch die Stallhelligkeit messen und für die Helligkeitssteuerung der Beleuchtung verwendet werden.

In einer weiteren besonders bevorzugten Ausführungsform wird die Signalisierungshelligkeit des Ausschleusungsindikators für einen Ausschleuser aufgrund einer von einer Kamera ermittelten lokalen Helligkeit gesteuert. Damit können zum Beispiel Orte mit direkter Sonneneinstrahlung heller beleuchtet werden, als Orte im Schatten. Dies führt zu weniger Stress der Tiere beim Abernten.

In einer weiteren bevorzugten Ausführungsform wird aufgrund der vorhandenen Clouddaten die Gewichtsveränderung eines Tieres zwischen Ausschleusung und Weiterverarbeitung (z.B. Schlachtung) prognostiziert und darauf basierend der Selektionsentscheid angepasst. Dies führt zu einem genauer definierbaren Gewicht bei der Ablieferung. Gerade bei langen Transportwegen oder Zwischen-Einstallung ist diese Ausführungsform besonders effizient.

Gemäß einem weiteren erfindungsgemäßen Aspekt wird ein Verfahren zum automatisierten Kennzeichnen eines ausschleusungsreifen Schweines vorgeschlagen. Das Verfahren umfasst die Schritte: Bestimmen einer Gewichtsangabe wenigstens eines Schweines mit einer Detektionseinrichtung; und Erzeugen eines Ausschleusungsindikators mit einer Auswertungseinrichtung, wobei die Auswertungseinrichtung zum Datenaustausch mit der Detektionseinrichtung und mit einer Datenbank eingerichtet ist, und wobei in der Datenbank schweinebezogene Daten breitgestellt sind und die schweinebezogenen Daten Angaben über wenigstens ein bestimmtes oder ein bestimmbares Schwein umfassen, wobei das Erzeugen des Ausschleusungsindikators in Abhängigkeit von dem bestimmten Gewichtswert und in Abhängigkeit von den schweinebezogenen Daten erfolgt, um das Schwein mit dem Ausschleusungsindikator automatisiert als ausschleusungsreif zu kennzeichnen.

Vorzugsweise wird vorgeschlagen, dass die im Verfahren vorgeschlagene Detektionseinrichtung und die Auswertungseinrichtung und die Datenbank und die schweinebezogenen Daten und der Ausschleusungsindikator ausgebildet sind, wie vorstehend zu der Vorrichtung beschrieben. Es wird für das Verfahren auf die Erläuterungen, Definitionen und Vorteile zu der Vorrichtung verwiesen.

Gemäß einem weiteren erfindungsgemäßen Aspekt wird ein Computerprogrammprodukt beansprucht, wobei das Computerprogrammprodukt Befehle umfasst, die bei der Ausführung des Computerprogrammprodukts durch einen Computer diesen veranlassen, die Schritte des Verfahrens nach einer der vorstehenden oder nachstehenden Ausführungsform auszuführen. Auf alle Erläuterungen, Definitionen und Vorteile zu der vorstehend beschriebenen Vorrichtung und dem vorstehend beschriebenen Verfahren wird verwiesen. Gemäß einem weiteren erfindungsgemäßen Aspekt wird ein computerlesbares Speichermedium beansprucht, wobei das computerlesbare Speichermedium Befehle umfasst, die bei der Ausführung durch einen Computer diesen veranlassen, die Schritte des Verfahrens nach einer der vorstehenden oder nachstehenden Ausführungsform auszuführen. Auf alle Erläuterungen, Definitionen und Vorteile zu der vorstehend beschriebenen Vorrichtung und dem vorstehend beschriebenen Verfahren wird verwiesen.

Gemäß einem weiteren erfindungsgemäßen Aspekt wird ein computerlesbarer Datenträger beansprucht, wobei auf dem computerlesbaren Datenträger das Computerprogrammprodukt nach der vorstehenden Ausführungsform gespeichert ist. Auf alle Erläuterungen, Definitionen und Vorteile zu der vorstehend beschriebenen Vorrichtung und dem vorstehend beschriebenen Verfahren und dem Computerprogrammprodukt wird verwiesen.

Gemäß einem weiteren erfindungsgemäßen Aspekt wird ein Datenträgersignal beansprucht, wobei das Datenträgersignal das Computerprogrammprodukt nach der vorstehenden Ausführungsform überträgt. Auf alle Erläuterungen, Definitionen und Vorteile zu der vorstehend beschriebenen Vorrichtung und dem vorstehend beschriebenen Verfahren und dem Computerprogrammprodukt wird verwiesen.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:
- Fig. 1: zeigt schematisch eine erfindungsgemäße Vorrichtung zum automatisierten Kennzeichnen eines ausschleusungsreifen Schweines;
- Fig. 2: zeigt schematisch eine Vorrichtung zum automatisierten Kennzeichnen eines ausschleusungsreifen Schweines in einer weiteren Ausführungsform;
- Fig. 3: zeigt schematisch eine Vorrichtung zum automatisierten Kennzeichnen eines ausschleusungsreifen Schweines in einer weiteren Ausführungsform.

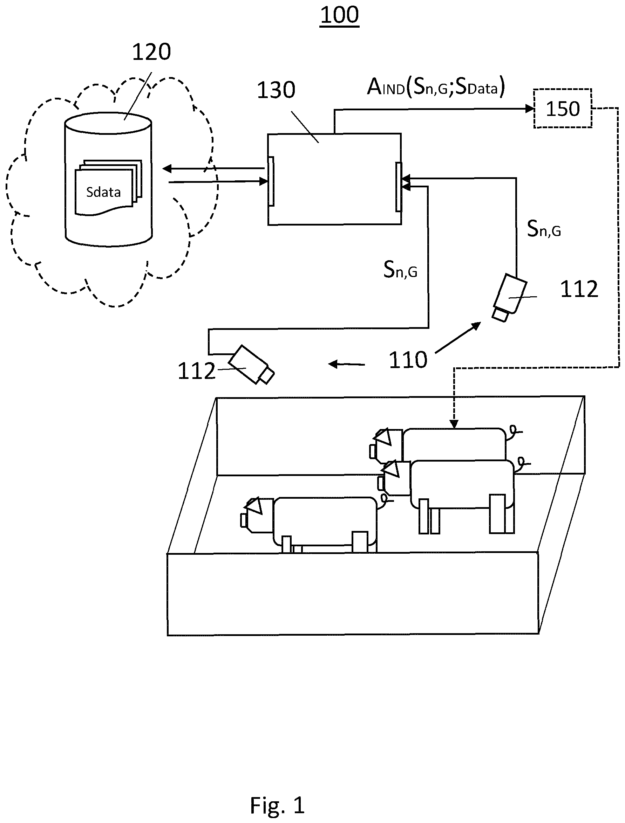

Die Figur 1 zeigt eine Vorrichtung 100 zum automatisierten Kennzeichnen eines ausschleusungsreifen Schweines.

Die Vorrichtung 100 umfasst eine Detektionseinrichtung 110 zum Bestimmen einer Gewichtsangabe S_{n,G} wenigstens eines Schweines. Die Detektionseinrichtung ist beispielsweise ein Kamerasystem bestehend aus zwei Kameras 112, die die Schweine in einem Aufzuchtbereich 172 optisch überwachen. Mit der Detektionseinrichtung 110 können so die drei Gewichtsangaben S_{1,G}, S_{2,G} und S_{3,G} der drei beispielhaft gezeigten Schweine bestimmt werden.

Die Vorrichtung 100 umfasst zudem eine Datenbank 120 mit schweinebezogenen Daten S_{Data}. Die schweinebezogenen Daten S_{Data} umfassen Angaben über wenigstens ein bestimmtes oder ein bestimmbares Schwein, beispielsweise die schweinebezogenen Daten der drei gezeigten Schweine.

Die Vorrichtung 100 umfasst zudem eine Auswertungseinrichtung 130 zum Erzeugen eines Ausschleusungsindikators A_{IND}, wobei die Auswertungseinrichtung 130 zum Datenaustausch mit der Detektionseinrichtung 110 und mit der Datenbank 120 eingerichtet ist. Die Auswertungseinrichtung 130 erzeugt den Ausschleusungsindikator A_{IND} in Abhängigkeit von dem bestimmten Gewichtswert S_{n,G} und in Abhängigkeit von den schweinebezogenen Daten S_{Data}, um wenigstens eines derdrei Schweine mitdem Ausschleusungsindikator A_{IND} automatisiert als ausschleusungsreif zu kennzeichnen. Die Abhängigkeit des Ausschleusungsindikators A_{IND} ist auch durch den Klammerausdruck A_{IND}(S_{n,G};S_{Data}) in der Figur 1 veranschaulicht. Die schweinebezogenen Daten können verschiedene Angaben über die Schweine umfassen, wie vorstehend beschrieben.

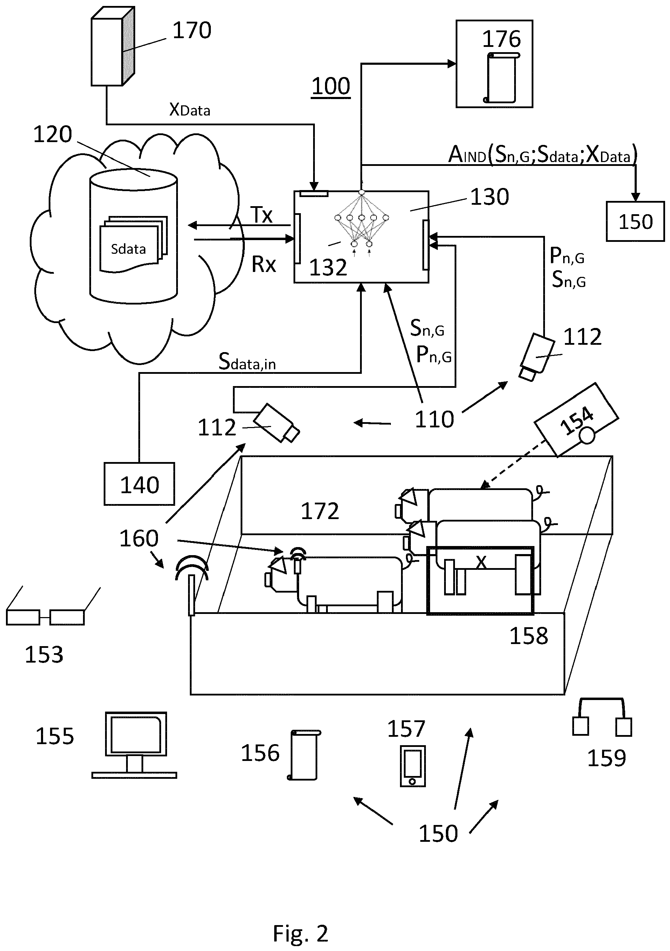

Die Fig. 2 zeigt verschiedene spezielle Ausführungsformen der generischen Vorrichtung, wie in der Figur 1 gezeigt.

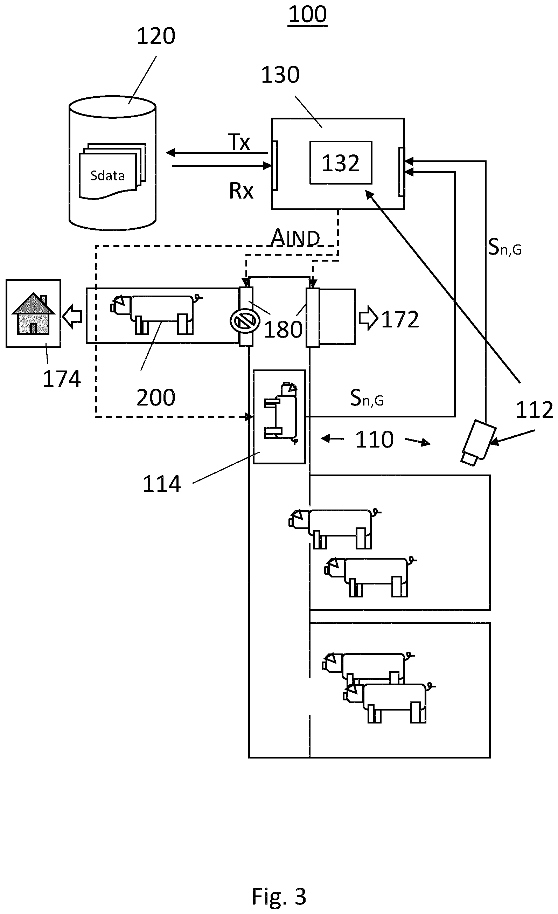

Es ist gezeigt, dass die Detektionseinrichtung 110 als ein optisches Kamerasystem 112 ausgebildet sein kann, das mit einem Auswertungsalgorithmus 132 dazu eingerichtet ist, einen aktuellen Gewichtswert des wenigstens einen Schweins zu bestimmen. Zudem kann die Detektionseinrichtung 110 auch als Waage 114 ausgebildet sein, wie in der Figur 3 gezeigt.

Es ist auch gezeigt, dass die Datenbank 120 eine Clouddatenbank ist, wie anhand der symbolischen Wolke veranschaulicht ist.

Die Vorrichtung 100 ist Teil einer landwirtschaftlichen Anlage zur Nutztierhaltung ist, nämlich einer landwirtschaftlichen Anlage zur Schweinehaltung bzw. Schweinezucht, was durch die drei Schweine, die in einer Bucht stehen, veranschaulicht ist.

Es ist auch gezeigt, dass die Vorrichtung 100 zudem eine Datenerfassung 140 aufweist mittels der neue schweinebezogenen Daten S_{Data,in} den schweinebezogenen Daten in der Datenbank 120 hinzugefügt werden, um die schweinebezogenen Daten S_{Data} zu aktualisieren und eine Schweinedatenhistorie zu erstellen.

Die Datenerfassung 140 ist nur schematisch als Block 140 dargestellt, kann aber eine manuelle Datenerfassung sein und/oder eine halbautomatisierte Datenerfassung und/oder eine vollautomatisierte Datenerfassung. Die Datenerfassung 140 ist dazu eingerichtet, neue schweinebezogene Daten S_{data,in} in regelmäßigen Zeitabständen oder ereignisgesteuert der Datenbank 120 hinzuzufügen.

Wie in der Figur 2 zu erkennen, ist das Auswertungsmodul über eine Schnittstelle mit der Datenbank 120 verbunden. Über eine Sendeverbindung TX werden Daten an die Datenbank 120 übermittelt oder Datenanrufanfragen an die Datenbank übersendet. Über einen Empfangsverbindung RX werden Daten von der Datenbank 120 empfangen. Die mit Pfeilen veranschaulichten Kommunikationswege sind nur beispielhaft und die Datenerfassung 140 könnte z.B. auch direkt mit der Datenbank 120 kommunizieren. Die Pfeile in der Figur 2 veranschaulichen prinzipiell die Richtung der Daten- oder Signalverbindung.

Es ist auch in der Figur 2 gezeigt, dass die Detektionseinrichtung 110 zum Bestimmen der Gewichtsangabe des wenigstens einen Schweins dazu eingerichtet ist, mittels Interpolation die Gewichtsangabe des Schweines zu schätzen, wobei die gezeigte kamerabasierten Detektionseinrichtung 112 mittels einer Interpretation mehrerer Bilder aus unterschiedlichen Perspektiven dazu eingerichtet, die Gewichtsangabe des Schweines zu schätzen. Wie der Figur 2 zu erkennen ist, sind die beiden Kameras 112 unterschiedlich ausgerichtet und nehmen einen unterschiedlichen Bereich des Aufzuchtbereichs 172 auf.

Es ist auch gezeigt, dass die Auswertungseinrichtung 130 zum Erzeugen des Ausschleusungsindikators mit einem Auswertungsalgorithmus 132 ausgebildet ist, wobei der Auswertungsalgorithmus 132 lokal auf einer Berechnungseinheit einer landwirtschaftlichen Anlage zur Nutztierhaltung eingerichtet ist und der Auswertungsalgorithmus ein Machine-Learning Algorithmus ist, nämlich ein künstliches neuronales Netz.

Die Vorrichtung 100 kann zudem eine Anzeigeeinrichtung 150 zum Anzeigen eines Schweines umfassen, das mit dem Ausschleusungsindikator A_{IND} als ausschleusungsreif gekennzeichnet ist, wobei die Anzeigeeinrichtung 150 dazu eingerichtet ist, wenigstens ein Schwein in Abhängigkeit von dem erzeugten Ausschleusungsindikator A_{IND} als ausschleusungsreif zu kennzeichnen. Die Anzeigeeinrichtung ist eine optische Anzeigeeinrichtung 153 bis 159 oder eine akustische Anzeigeeinrichtung 159.

Die Anzeigeeinrichtung 150 weist wenigstens ein Anzeigemittel 152 zum Kennzeichnen ausschleusungsreifer Schweine auf, wobei als Anzeigemittel gezeigt sind: Ein mobiles Anzeigemittel 153, 157 mit einem Softwareprogramm zur computergestützten Erweiterung der Realitätswahrnehmung, nämlich eine Augmented-Reality-Brille 153 und/oder ein Endgerät 157 mit einer kamerabasierten Augmented-Reality-Applikation; Ein schwenkbarer Scheinwerfer 154, der dazu eingerichtet ist, ein ausschleusungsreifes Schwein mittels einer Lichtprojektion auf das Schwein als ausschleusungsreif zu markieren, eine Bildschirmanzeige 155, in der ein ausschleusungsreifes Schwein markiert ist, eine Liste 156, in der ein ausschleusungsreifes Schwein aufgelistet ist; ein mobiles Anzeigemittel 157 mit dem ein ausschleusungsreifes Schwein angezeigt wird; ein Videoprojektionssystem 158, das dazu eingerichtet ist, ein Symbol X auf das ausschleusungsreifes Schwein zu projizieren; und eine Kopfhörereinrichtung 159 mit einer Sprachausgabe, die eine Kennzeichnung eines ausschleusungsreifen Schweines akustisch wiedergibt.

Die Figur 2 veranschaulicht auch, dass eine Positionsbestimmungseinrichtung 112, 162 zur örtlichen Bestimmung eines Schweines in einem Aufzuchtbereich einer landwirtschaftlichen Anlage zur Nutztierhaltung und/oder zur örtlichen Bestimmung einer Person in dem Aufzuchtbereich der landwirtschaftlichen Anlage zur Nutztierhaltung.

Gezeigt ist dabei eine mit einem Kamerasystem 112 ausgebildete Positionsbestimmungseinrichtung, die dazu eingerichtet ist, Ohrmarken von Schweinen in dem Aufzuchtbereich zu erkennen, die einen optisch scanbaren Code auf einer Ohrmarke erkennen, und es ist auch ein Ortungssystem 162 mit einer Sendeeinrichtung und einer Empfängereinrichtung gezeigt, wobei die Empfängereinrichtung an einem Schwein angeordnet ist.

Zudem ist in der Figur 2 eine Zusatzdatenschnittstelle gezeigt zum Empfangen von Zusatzdaten X_{Data} eines EDV-Systems 170, wobei die Auswertungseinrichtung 130 zum Erzeugen des Ausschleusungsindikators A_{IND} zusätzlich dazu eingerichtet ist, den Ausschleusungsindikator A_{IND} in Abhängigkeit von den empfangenen Zusatzdaten zu erzeugen.

Das optische Kamerasystem 112 ist aus mehreren Kameras ausgebildet, die jeweils aus unterschiedlichen Richtungen einen Aufzuchtbereich 172 überwachen, wobei die Kameras hochauflösende Kameras sind, mit einer Auflösung von mindestens 720p, und die mehreren Kameras sind mittels einem übergeordneten Interpretationsmechanismus dazu eingerichtet eine interpolierte Gewichtsabschätzung zu erzeugen.

Zudem ist ein Zertifikatsgenerator 176 gezeigt, der dazu eingerichtet ist, ein Zertifikat für ein Schwein zu erstellen, das mit dem Ausschleusungsindikator als ausschleusungsreif markiert wurde.

Die Figur 3 zeigt eine Vorrichtung 100 mit einem zum automatisierten Kennzeichnen eines ausschleusungsreifen Schweines mit einer Detektionseinrichtung 112, 114 zum Bestimmen einer Gewichtsangabe wenigstens eines Schweines, eine Datenbank 120 mit schweinebezogenen Daten S_{Data}, wobei die schweinebezogenen Daten Angaben über wenigstens ein bestimmtes oder ein bestimmbares Schwein umfassen, und eine Auswertungseinrichtung 130 zum Erzeugen eines Ausschleusungsindikators A_{IND}, wobei die Auswertungseinrichtung zum Datenaustausch mit der Detektionseinrichtung 110 und mit der Datenbank 120 eingerichtet ist und die Auswertungseinrichtung 130 den Ausschleusungsindikator A_{IND} in Abhängigkeit von dem bestimmten Gewichtswert S_{n,G} und in Abhängigkeit von den schweinebezogenen Daten S_{Data} erzeugt, um das Schwein mit dem Ausschleusungsindikator automatisiert als ausschleusungsreif zu kennzeichnen.

Die Detektionseinrichtung 110 ist mit einem optischen Kamerasystem 112 ausgebildet, das mit einem Auswertungsalgorithmus 132 dazu eingerichtet ist, einen aktuellen Gewichtswert des wenigstens einen Schweins zu bestimmen und die Detektionseinrichtung 110 umfasst zudem eine elektronische Waage 114.

Zudem ist in der Figur 3 wenigstens eine automatisierte Türeinrichtung 180 gezeigt, wobei die Türeinrichtung 180 dazu eingerichtet ist, in Abhängigkeit von dem erzeugten Ausschleusungsindikator seinen Öffnungszustand zu verändern. So kann beispielsweise ein Schwein, dass über die Waage 114 läuft individuell durch die zusätzliche Berücksichtigung der schweinebezogenen Daten ausgeschleust werden. So kann zum Beispiel ein gesundes Schwein 200 zum Schlachthaus 176 oder Abtransport ausgeschleust werden und ein nicht gesundes Schwein oder falsch ernährtes Schwein 202 wieder zurück in einen Aufzuchtbereich 172 geschleust werden.

### Bezugszeichenliste

- 100: Vorrichtung
- 110: Detektionseinrichtung
- 112: Kamerasystem
- 114: Waage
- 120: Datenbank oder Datenspeicher
- 130: Auswertungseinrichtung
- 132: Auswertungsalgorithmus
- 140: Datenerfassung
- 150: Anzeigeeinrichtung
- 152: Anzeigemittel
- 153: mobiles Anzeigemittel
- 154: schwenkbarer Scheinwerfer
- 155: Bildschirmanzeige
- 156: Liste
- 157: mobiles Anzeigemittel
- 158: Videoprojektionssystem
- 159: Kopfhörereinrichtung
- 160: Positionsbestimmungseinrichtung
- 170: EDV-Systems
- 172: Aufzuchtbereich
- 174: Schlachtbereich oder Transportbereich
- 180: Türeinrichtung
- S_{Data}: schweinebezogene Daten
- S_{Data,in}: neue schweinebezogene Daten
- X_{Data}: Zusatzdaten
- TX: Sendedaten
- RX: Empfangsdaten
- A_{IND}: Ausschleusungsindikator
- S_{n,G}: Gewichtsangabe
- P_{n,G}: Positionsangabe

## Patentansprüche

1. Vorrichtung (100) zum automatisierten Kennzeichnen eines ausschleusungsreifen Schweines, umfassend:
- eine Detektionseinrichtung (110, 112, 114) zum Bestimmen einer Gewichtsangabe wenigstens eines Schweines,
- eine Datenbank (120) mit schweinebezogenen Daten (S_{Data}), wobei die schweinebezogenen Daten Angaben über wenigstens ein bestimmtes oder ein bestimmbares Schwein umfassen, und
- eine Auswertungseinrichtung (130) zum Erzeugen eines Ausschleusungsindikators (A_{IND}), wobei die Auswertungseinrichtung zum Datenaustausch mit der Detektionseinrichtung (110) und mit der Datenbank (120) eingerichtet ist,
**dadurch gekennzeichnet, dass** die Auswertungseinrichtung (130) den Ausschleusungsindikator (A_{IND}) in Abhängigkeit von dem bestimmten Gewichtswert (S_{n,G}) und in Abhängigkeit von den schweinebezogenen Daten (S_{Data}) erzeugt, um das Schwein mit dem Ausschleusungsindikator automatisiert als ausschleusungsreif zu kennzeichnen.

2. Vorrichtung nach Anspruch 1, wobei die Detektionseinrichtung (110) ein optisches Kamerasystem (112) ist, das mit einem Auswertungsalgorithmus dazu eingerichtet ist, einen aktuellen Gewichtswert (S_{n,G,akt}) des wenigstens einen Schweines zu bestimmen und/oder wobei die Detektionseinrichtung(110) eine Waage (114) ist, vorzugsweise eine elektronische Waage, und/oder
wobei die Datenbank (120) eine Clouddatenbank ist und/oder eine lokale Datenbank mit einer Cloudschnittstelle ist, wobei vorzugsweise die lokale Datenbank dazu eingerichtet ist, im Falle eines Ausfalls der Cloudschnittstelle, lokal gespeicherte Daten der Auswertungseinrichtung bereitzustellen.

3. Vorrichtung nach einem der vorstehenden Ansprüche, wobei die Vorrichtung (100) Teil einer landwirtschaftlichen Anlage zur Nutztierhaltung ist, und/oder
wobei die Vorrichtung (100) zudem eine Datenerfassung (140) aufweist mittels der neue schweinebezogenen Daten (S_{Data,in}) den schweinebezogenen Daten in der Datenbank (120) hinzugefügt werden, um die schweinebezogenen Daten (S_{Data}) zu aktualisieren und/oder eine Schweinedatenhistorie zu erstellen, vorzugsweise ist die Datenerfassung (140) eine manuelle Datenerfassung und/oder ist die Datenerfassung (140) eine halbautomatisierte Datenerfassung und/oder ist die Datenerfassung (140) eine vollautomatisierte Datenerfassung, und weiter vorzugsweise
ist die Datenerfassung (140) dazu eingerichtet, neue schweinebezogene Daten in regelmäßigen Zeitabständen oder ereignisgesteuert der Datenbank hinzuzufügen.

4. Vorrichtung nach einem der vorstehenden Ansprüche, wobei die schweinebezogenen Daten (S_{Data}) die folgenden Angaben aus der Liste von Angaben umfassen, nämlich wenigstens eine eindeutige Schweine-Identifikation (S_{ID}) und eine Gewichtsangabe, und optional umfassen die schweinebezogenen Daten wenigstens eine oder mehrere der nachfolgenden Angaben:
- eine Lebensdauerangabe, insbesondere eine Geburtstags- oder Altersangabe,
- eine Gattungsangabe,
- eine oder mehrere historische Gewichtsangaben,
- eine Nahrungszusammensetzung
- eine Nahrungsaufnahmeangabe,
- einen Tierbewegungsindikator
- eine Flüssigkeitsaufnahmeangabe,
- eine Tiergesundheitsangabe,
- eine Medikamentenangabe,
- eine Zusatzstoffangabe,
- eine Krankheitsangabe,
- eine Ausscheidungsangabe,
- eine Aufzuchtortsangabe,
- eine Positionsangabe zur Kennzeichnung eines Aufenthaltsorts des Schweines in einer landwirtschaftlichen Anlage,
- eine Verhaltensangabe,
- ein bzw. den Schlachtreifeindikator,
- eine Abweichung einer ermittelten Gewichtsangabe zu einem Zielgewicht,
- eine Genauigkeit der ermittelten Gewichtsangabe, und/oder
wobei die Detektionseinrichtung (110) zum Bestimmen der Gewichtsangabe des wenigstens einen Schweines dazu eingerichtet ist, mittels Interpolation die Gewichtsangabe des Schweines zu schätzen, insbesondere bei Verwendung einer kamerabasierten Detektionseinrichtung (110) ist die Detektionseinrichtung mittels einer Interpretation mehrerer Bilder aus unterschiedlichen Perspektiven oder in unterschiedlicher zeitlicher Reihenfolge dazu eingerichtet, die Gewichtsangabe des Schweines zu schätzen.

5. Vorrichtung nach einem der vorstehenden Ansprüche, wobei
- die Auswertungseinrichtung (130) zum Erzeugen des Ausschleusungsindikators mit einem Auswertungsalgorithmus (132) ausgebildet ist, wobei der Auswertungsalgorithmus lokal auf einer Berechnungseinheit einer landwirtschaftlichen Anlage zur Nutztierhaltung eingerichtet ist und/oder der Auswertungsalgorithmus dezentral auf einer Cloudcomputereinrichtung eingerichtet ist, und vorzugsweise ist der Auswertungsalgorithmus ein Machine-Learning Algorithmus, insbesondere ein künstliches neuronales Netz oder dergleichen, vorzugsweise ist ein Ausgabewert des Auswertungsalgorithmus wenigstens ein bzw. der Ausschleusungsindikator.

6. Vorrichtung nach einem der vorstehenden Ansprüche zudem umfassend
- eine Anzeigeeinrichtung (150) zum Anzeigen eines Schweines, das mit dem Ausschleusungsindikator als ausschleusungsreif gekennzeichnet ist, wobei die Anzeigeeinrichtung (150) dazu eingerichtet ist, wenigstens ein Schwein in Abhängigkeit von dem erzeugten Ausschleusungsindikator als ausschleusungsreif zu kennzeichnen, vorzugsweise ist die Anzeigeeinrichtung eine optische Anzeigeeinrichtung oder eine akustische Anzeigeeinrichtung,
wobei vorzugsweise die Anzeigeeinrichtung (150) wenigstens ein Anzeigemittel (152) zum Kennzeichnen ausschleusungsreifer Schweine umfasst, wobei das Anzeigemittel ein Anzeigemittel ist aus der Liste von Anzeigemitteln aufweisend:
- ein mobiles Anzeigemittel (153) mit einem Softwareprogramm zur computergestützten Erweiterung der Realitätswahrnehmung, vorzugsweise eine Augmented-Reality-Brille und/oder ein Endgerät mit einer kamerabasierten Augmented-Reality-Applikation;
- ein schwenkbarer Scheinwerfer (154), der dazu eingerichtet ist, ein ausschleusungsreifes Schwein mittels einer Lichtprojektion auf das Schwein als ausschleusungsreif zu markieren, vorzugsweise wird eine Infrarot-Lichtprojektion mit dem Scheinwerfer erzeugt, und weiter vorzugsweise wird die Helligkeit der Lichtprojektion in Abhängigkeit eines Umgebungslichtsensors angepasst;
- eine Bildschirmanzeige (155), in der ein ausschleusungsreifes Schwein markiert ist;
- eine Liste (156), in der ein ausschleusungsreifes Schwein aufgelistet ist;
- ein mobiles Anzeigemittel (157) mit dem ein ausschleusungsreifes Schwein angezeigt wird;
- ein Videoprojektionssystem (155), das dazu eingerichtet ist, ein Symbol auf das ausschleusungsreife Schwein zu projizieren,
- eine Kopfhörereinrichtung (159) mit einer Sprachausgabe, die eine Kennzeichnung eines ausschleusungsreifen Schweines akustisch wiedergibt.

7. Vorrichtung nach einem der vorstehenden Ansprüche zudem umfassend
- eine Positionsbestimmungseinrichtung (112, 160) zur örtlichen Bestimmung eines Schweines in einem Aufzuchtbereich einer landwirtschaftlichen Anlage zur Nutztierhaltung und/oder zur örtlichen Bestimmung einer Person in dem Aufzuchtbereich der landwirtschaftlichen Anlage zur Nutztierhaltung,
vorzugsweise ist die Positionsbestimmungseinrichtung (112, 160) zur örtlichen Bestimmung des Schweines eine Positionsbestimmungseinrichtung aus der Liste von Positionsbestimmungseinrichtungen aufweisend:
- ein Kamerasystem (112), das dazu eingerichtet ist, Ohrmarken von Schweinen in dem Aufzuchtbereich zu erkennen, insbesondere umfasst die Ohrmarke einen optisch scanbaren Code,
- ein Kamerasystem (112), das dazu eingerichtet ist mittels Objekterkennung einen auf einem Schwein aufgebrachte Kennzeichnung zu identifizieren,
- ein Ortungssystem (160) mit einer Sendeeinrichtung und einer Empfängereinrichtung, wobei die Empfängereinrichtung an dem Schwein angeordnet ist,
und weiter vorzugsweise ist die Positionsbestimmung zur örtlichen Bestimmung einer Person in dem Aufzuchtbereich der landwirtschaftlichen Anlage
- eine kameragestützte Personenerkennung mit einem Personenerkennungsalgorithmus, und/oder
- ein Ortungssystem mit einer Sendeeinrichtung und einer Empfängereinrichtung, wobei die Empfängereinrichtung an der Person angeordnet ist.

8. Vorrichtung nach einem der vorstehenden Ansprüche 6 bis 7, wobei
- die Anzeigeeinrichtung (150) mit einem Auswertungsmodul eingerichtet ist, eine Reihenfolge zum Ausschleusen mehrerer ausschleusungsreifer Schweine anzuzeigen, wobei die Reihenfolge in Abhängigkeit von der mit der Positionsbestimmungseinrichtung bestimmten örtlichen Position der Schweine bestimmt ist, und/oder
- wobei die Anzeigeeinrichtung (150) dazu eingerichtet, die mit dem der Positionsbestimmungseinrichtung zur örtlichen Bestimmung eines Schweines bestimmte Position eines ausschleusungsreifen Schweines anzuzeigen.

9. Vorrichtung nach Anspruch 7, wobei die Positionsbestimmungseinrichtung dazu eingerichtet ist, die Position des Schweines kontinuierlich aufzuzeichnen, und wobei die Positionsbestimmungseinrichtung dazu eingerichtet ist, die aufgezeichnete Position als Positionsangabe in der Datenbank als schweinebezogene Daten zu speichern, um ein Bewegungsprofil zu erfassen.

10. Vorrichtung nach einem der vorstehenden Ansprüche zudem umfassend, eine Zusatzdatenschnittstelle zum Empfangen von Zusatzdaten (X_{Data}) eines EDV-Systems (170), wobei die Auswertungseinrichtung (130) zum Erzeugen des Ausschleusungsindikators (A_{IND}) zudem dazu eingerichtet ist, den Ausschleusungsindikator in Abhängigkeit von den empfangenen Zusatzdaten zu erzeugen, vorzugsweise sind die Zusatzdaten Daten aus der Liste von Daten aufweisend:
- eine Ortsposition eines Ausschleusers, die vorzugsweise mit einer bzw. der Positionsbestimmung zur örtlichen Bestimmung einer Person in dem Aufzuchtbereich der landwirtschaftlichen Anlage ermittelt wird,
- eine Transportkapazität einer Transporteinrichtung,
- eine Ausschleusungsgesamtmenge,
- ein Zeitplan.

11. Vorrichtung nach Anspruch 2, wobei das optische Kamerasystem (112) aus mehreren Kameras ausgebildet ist, die jeweils aus unterschiedlichen Richtungen einen Aufzuchtbereich (172) überwachen, wobei die Kameras vorzugsweise hochauflösende Kameras sind, mit einer Auflösung von mindestens 720p, und weiter vorzugsweise die mehreren Kameras dazu eingerichtet sind mittels einem übergeordneten Interpretationsmechanismus eine interpolierte Gewichtsabschätzung zu erzeugen.

12. Vorrichtung nach einem der vorstehenden Ansprüche zudem umfassend,
- wenigstens eine automatisierte Türeinrichtung (180), wobei die Türeinrichtung dazu eingerichtet ist, in Abhängigkeit von dem erzeugten Ausschleusungsindikator seinen Öffnungszustand zu verändern, und/oder
zudem umfassend, ein Zertifikatsgenerator (176) der dazu eingerichtet ist, ein Zertifikat für ein Schwein zu erstellen, das mit dem Ausschleusungsindikator als ausschleusungsreif markiert wurde.

13. Verfahren zum automatisierten Kennzeichnen eines ausschleusungsreifen Schweines, umfassend die Schritte:
- Bestimmen einer Gewichtsangabe wenigstens eines Schweines mit einer Detektionseinrichtung (110); und
- Erzeugen eines Ausschleusungsindikators mit einer Auswertungseinrichtung, wobei die Auswertungseinrichtung zum Datenaustausch mit der Detektionseinrichtung und mit einer Datenbank eingerichtet ist, und wobei in der Datenbank schweinebezogene Daten breitgestellt sind und die schweinebezogenen Daten Angaben über wenigstens ein bestimmtes oder ein bestimmbares Schwein umfassen,
**dadurch gekennzeichnet, dass** das Erzeugen des Ausschleusungsindikators in Abhängigkeit von dem bestimmten Gewichtswert und in Abhängigkeit von den schweinebezogenen Daten erfolgt, um das Schwein mit dem Ausschleusungsindikator automatisiert als ausschleusungsreif zu kennzeichnen.

14. Computerprogrammprodukt, umfassend Befehle, die bei der Ausführung des Computerprogrammprodukts durch einen Computer diesen veranlassen, die Schritte des Verfahrens nach Anspruch 13 auszuführen.

15. Computerlesbares Speichermedium, umfassend Befehle, die bei der Ausführung durch einen Computer diesen veranlassen, die Schritte des Verfahrens nach Anspruch 13 auszuführen.
